# EUROPÄISCHE PATENTANMELDUNG

(11) **EP 1 947 140 A1**
(43) Veröffentlichungstag der Anmeldung: **23.07.2008**
(21) Anmeldenummer: 07100683.7
(22) Anmeldetag: 17.01.2007
(51) Int. Cl.: C08K 3/08, C08K 5/00, C08K 13/02

(54) **Kunststoffe, enthaltend Metallpulver, bestehend aus Sn oder einer Sn-Legierung, als Flammschutzmittel**

(71) Anmelder: Rupp, Roman, 63322 Rödermark (DE); URSA International GmbH, 04509 Delitzsch (DE)
(72) Erfinder: Rupp, Roman, 63322, Rödermark (DE); Schulze, Dirk, 04155 Leipzig (DE); Lask, Gert-Wilhelm, 66802 Überherrn (DE)
(74) Vertreter: Schreiber, Christoph

(57) **Zusammenfassung**

Die vorliegende Erfindung betrifft einen Kunststoff, umfassend 0,01-1,5 Gew.% eines ersten Flammschutzmittels und 0,01-1,5 Gew.% eines zweiten Flammschutzmittels, wobei das erste Flammschutzmittel ein Pulver, bestehend aus Sn oder einer Sn-Legierung mit einem Schmelzpunkt von < 350°, ist und das zweite Flammschutzmittel eine halogenierte organische Verbindung ist, und wobei die Summe an ersten und zweitem Flammschutzmittel 0,1-3,0 Gew.% beträgt. Außerdem betrifft die vorliegende Erfindung die Verwendung von Pulver, bestehend aus Sn oder einer Sn-Legierung mit einem Schmelzpunkt < 350°C als Flammschutzmittel.

## Beschreibung

Die vorliegende Erfindung betrifft einen Kunststoff, der ein Metallpulver, bestehend aus Sn oder einer Sn-Legierung, als Flammschutzmittel enthält, ein Verfahren zur Herstellung eines solchen Kunststoffs und die Verwendung eines Pulvers aus Sn oder einer Sn-Legierung als Flammschutzmittel.

Da es sich bei Kunststoffen um Produkte handelt, die vollständig oder überwiegend aus organischen Verbindungen bestehen, weisen sie den Nachteil einer hohen und schnellen Entzündlichkeit auf. Vor allem im Bereich der Elektronik und Elektrik, aber auch bei anderen alltagsrelevanten Gegenständen werden hohe Anforderungen an den Brandschutz und die Brandschutzsicherheit gestellt. Um den staatlich vorgeschriebenen Sicherheitsregelungen gerecht zu werden, ist es üblich, den Kunststoffen eine geeignete Menge an Flammschutzmittel zuzusetzen.

Als Flammschutzmittel für Kunststoffe werden gewöhnlich halogenierte, insbesondere bromierte, organische Verbindungen eingesetzt. Tetrabrombisphenol A (TBBA) und Hexabromcyclododecan (HBCD) sind zwei der am häufigsten verwendeten halogenierten Flammschutzmittel, die für elektronische Vorrichtungen und Isoliermaterialien verwendet werden. HBCD wird außerdem sehr häufig in beschichteten Textilien verwendet.

In letzter Zeit hat es sich jedoch gezeigt, dass die halogenierten Flammschutzmittel eine Gefahr für die Umwelt und die Gesundheit des Menschen darstellen können, wenn sie aus den Kunststoffen freigesetzt werden, wo sie häufig nur physikalisch gebunden sind. Da darüber hinaus die halogenierten Flammschutzmittel relativ teuer sind, wird angestrebt, diese vollständig oder zumindest teilweise durch ein kostengünstigeres und umweltverträgliches Material zu ersetzen.

Die gegenwärtigen Erfinder haben überraschend gefunden, dass zumindest ein Teil des halogenierten Flammschutzmittels durch ein Pulver, bestehend aus Sn oder einer Sn-Legierung mit einem Schmelzpunkt < 350°C, ersetzt werden kann. Obwohl noch nicht abschließend geklärt werden konnte, worauf die flammhemmende Wirkung des Sn-Pulvers bzw. der pulverförmigen Sn-Legierung beruht, wird vermutet, dass der relativ niedrige Schmelzpunkt von < 350°C und der damit verbundene hohe Dampfdruck des Zinns bei relativ niedriger Temperatur eine entscheidende Rolle spielt.

Dementsprechend umfasst der Kunststoff der vorliegenden Erfindung 0,01-1,5 Gew.% eines Pulvers, bestehend aus Sn oder einer Sn-Legierung mit einem Schmelzpunkt < 350°C, als ein erstes Flammschutzmittel und 0,01-1,5 Gew.% einer halogenierten organischen Verbindung als ein zweites Flammschutzmittel, wobei die Summe des ersten und zweiten Flammschutzmittels 0,1 bis 3 Gew.% beträgt.

Im Rahmen dieser Erfindung ist es auch möglich, dass der Kunststoff 0,01 bis 3 Gew.% , bevorzugt 0,2 bis 3 Gew.%, des ersten Flammschutzmittels enthält, ohne dass die Zugabe des zweiten Flammschutzmittels notwendig ist.

Die in dieser Anmeldung verwendete Angabe "Gew.%" bezieht sich immer auf das Gesamtgewicht des Kunststoffs. Bei geschäumten Kunststoffen ist das Gesamtgewicht definiert als die Summe der Gewichte aller festen Bestandteile, Gase bleiben darin unberücksichtigt.

Unter dem hier verwendeten Begriff "Flammschutzmittel" sind solche Mittel zu verstehen, die, wenn sie zu einem Kunststoff hinzugefügt werden, das Brandverhalten des Kunststoffs verändern, wobei dies über unterschiedliche Wirkungsmechanismen erzielt werden kann, z.B. Beeinflussung der Reaktion in der Flamme, unterstützende bzw. synergistische Wirkung mit einem zweiten Flammschutzmittel oder thermische Stabilisierung eines zweiten Flammschutzmittels.

Um brandschutztechnisch als "schwerentflammbar" klassifiziert zu werden, ist es für Kunststoffe, die als Dämmstoff eingesetzt werden, erforderlich, dass sie hinsichtlich ihres Brandverhaltens gemäß DIN 4102 zumindest die Kriterien der Baustoffklasse B1 erfüllen. Es ist daher bevorzugt, dass der Kunststoff der vorliegenden Erfindung ein Brandverhalten zeigt, das mindestens einem Baustoff der Klasse B1 gemäß DIN 4102 entspricht. So enthält beispielsweise geschäumtes Polystyrol (XPS) gewöhnlich etwa 2 bis 3 Gew.% eines halogenierten Flammschutzmittels, damit die Anforderungen der Baustoffklasse B1 gemäß DIN 4102 erfüllt werden. Die Erfinder der vorliegenden Erfindung haben überraschend gefunden, dass die Baustoffklasse B1 auch bei deutlicher Verringerung des Gehaltes an halogeniertem Flammschutzmittel um 50% oder mehr erreicht werden kann, wenn ein Pulver, bestehend aus Sn oder einer Sn-Legierung mit einem Schmelzpunkt < 350°C, zum Kunststoff zugegeben wird.

Im Hinblick auf die Bereitstellung eines Kunststoffs, der als Baustoff ein Brandverhalten gemäß Baustoffklasse B1 nach DIN 4102 zeigt, ist es bevorzugt, dass der Kunststoff der vorliegenden Erfindung das erste Flammschutzmittel in Form eines Pulvers, bestehend aus Sn oder einer Sn-Legierung mit einem Schmelzpunkt < 350°C, in einer Menge von 0,1 bis 1,0 Gew.% und das zweite Flammschutzmittel in Form einer halogenierten organischen Verbindung in einer Menge von 0,1 bis 1,0 Gew.% enthält, wobei die Summe des ersten und zweiten Flammschutzmittels 0,2 bis 2 Gew.% beträgt. Besonders bevorzugt ist ein Kunststoff, der 0,1 bis 0,5 Gew.% des ersten Flammschutzmittels und 0,2 bis 0,6 Gew.% des zweiten Flammschutzmittels enthält, wobei die Summe des ersten und zweiten Flammschutzmittels 0,4 bis 1,1 Gew.% beträgt.

Das Pulver, bestehend aus Sn oder der Sn-Legierung mit einem Schmelzpunkt < 350°C, das als erstes Flammschutzmittel verwendet wird, ist nicht speziell limitiert und es können jegliche kommerziell erhältliche Produkte eingesetzt werden. Beispiele für eine Sn-Legierung mit einem Schmelzpunkt < 350°C sind Kupfer-Zinn Legierungen (Cu,Sn), Silber-Zinn Legierungen (Ag,Sn), Blei-Zinn Legierungen (Pb,Sn), Zink-Zinn Legierungen (Zn,Sn), sowie ternäre Systeme, wie (Ag,Cu,Sn), insbesondere (Ag,Cu,Sn) = (0,0055; 0,0185; 0,9760) mit einem Schmelzpunkt von 225°C, oder (Au,Cu,Sn) sowie Sn-Lot-Legierungen. Besonders vorteilhaft ist eine (Cu,Sn)-Legierung mit einem Schmelzpunkt (227°C), der kleiner ist als der Schmelzpunkt des reinen Zinn (231,96°C), wie z.B. die Legierung mit der Zusammensetzung Molenbruch Zinn X_{Sn} = 0,983 sowie eine (Ag,Sn)-Legierung mit einem Schmelzpunkt von 221°C einer Legierung mit der Zusammensetzung Molenbruch Zinn x_{Sn} = 0,962. Die Partikelgröße des Sn-Pulvers bzw. des Pulvers aus der Sn-Legierung kann beliebig gewählt werden. Es ist jedoch vorteilhaft, möglichst kleine Partikel mit einer mittleren Partikelgröße im Bereich von 1 bis 1000 µm einzusetzen, bevorzugt 10 bis 100 µm, besonders bevorzugt 20 bis 80 µm.

Als halogenierte organische Verbindung, die als zweites Flammschutzmittel verwendet wird, kann jegliche bekannte halogenierte Verbindung, die üblicherweise als Flammschutzmittel verwendet wird, eingesetzt und abhängig von der beabsichtigten Verwendung des Kunststoffs geeignet ausgewählt werden. Vorzugsweise werden bromierte organische Verbindungen eingesetzt. Als Beispiele für Flammschutzmittel, die in dem Kunststoff der vorliegenden Erfindung verwendbar sind, können genannt werden: Ammoniumbromid, Tris(tribromphenyl)triazin, Tris(tribromneopentyl)phosphat, Tribromneopentylalkohol (TBNPA), Dibromneopentylgycol (DBNPG), Tribromphenol (TBP), Tetrabrombisphenyl A-bis(2,3-dibrompropylether), bromiertes Polystyrol, Pentabrombenzylacrylat (PBB-MA), Poly(pentabrombezylacrylat) (PBB-PA), Hexabromcyclododecan (HBCD), Decabromdiphenyloxid (DECA), Tetrabrombisphenol A (TBBA) und bromiertes Trimethylphenylindan. Das Flammschutzmittel, das gemäß der vorliegenden Erfindung besonders bevorzugt verwendet wird, ist HBCD.

Die Erfindung ist für jeden Kunststoff anwendbar. Als Ausgangsmaterial für den Kunststoff kann jedes organische Polymermaterial, das zur KunststoffHerstellung geeignet ist, verwendet werden. Das Polymer kann ein Homo- oder Copolymer sein. Vorzugsweise ist der Kunststoff ausgewählt aus extrudiertem Polystyrol (XPS), expandiertem Polystyrol (EPS), extrudiertem Polystyrolschaum, Polyurethan (PUR) und phenolischen Harzen.

Der Kunststoff gemäß der vorliegenden Erfindung kann weiterhin übliche Additive, wie Nukleierungsmittel, Gleitmittel, Farbstoffe, recycliertes Polystyrol, Co-Flammschutzmittel, physikalische und chemische Treibmittel sowie Verarbeitungshilfsmittel enthalten.

Zur Herstellung des Kunststoffs der vorliegenden Erfindung kann das erste Flammschutzmittel in Form eines Metallpulvers, bestehend aus Sn oder einer Sn-Legierung mit einem Schmelzpunkt < 350°C, und ein zweites Flammschutzmittel in Form einer halogenierten organischen Verbindung mit einem Polymermaterial in einem geeigneten Mischer oder Extruder gemischt werden. Die so hergestellte Mischung kann anschließend in einem geeigneten Formgebungsverfahren je nach Anwendung geeignet geformt werden. Geeignete Formgebungsverfahren sind beispielsweise Extrusion, Druckformen und Spritzguss.

Gemäß einer alternativen Ausführungsform kann das erste Flammschutzmittel in Form eines Pulvers, bestehend aus Sn oder einer Sn-Legierung mit einem Schmelzpunkt < 350°C, zunächst nur mit einem Teil des Polymermaterials gemischt werden, um einen so genannten ersten "Masterbatch" herzustellen. Dieser erste Masterbatch kann das erste Flammschutzmittel in einer Menge von 1 bis 50 Gew.% enthalten, bevorzugt 5 Gew.%. Ebenso wird das zweite Flammschutzmittel in Form einer halogenhaltigen organischen Verbindung mit einem anderen Teil des Polymermaterials gemischt, um einen zweiten Masterbatch herzustellen. Dieser zweite Masterbatch kann das zweite Flammschutzmittel in einer Menge von 1 bis 60 Gew.% enthalten, bevorzugt 50 Gew.%. Anschließend werden der so hergestellte erste und zweite Masterbatch mit einer geeigneten Menge an restlichem Polymermaterial in einem geeigneten Mischer oder Extruder gemischt, um den erfindungsgemäßen Kunststoff herzustellen.

Gemäß einer weiteren Ausführungsform der Erfindung ist es auch möglich, in einem ersten Schritt einen Masterbatch herzustellen, der sowohl das erste als auch das zweite Flammschutzmittel enthält. In diesem Fall ist es bevorzugt, dass der Masterbatch das erste Flammschutzmittel in einer Menge von 1 bis 10 Gew.% und das zweite Flammschutzmittel in einer Menge von 20 bis 60 Gew.% enthält. Der so hergestellte Masterbatch, der sowohl das erste als auch zweite Flammschutzmittel enthält, wird anschließend mit einer geeigneten Menge an Polymermaterial gemischt, um den Kunststoff der vorliegenden Erfindung herzustellen.

Die Verarbeitungstemperatur während des Mischens des Polymermaterials mit dem ersten und zweiten Flammschutzmittel und den weiteren optionalen Komponenten bzw. die Verarbeitungstemperatur während des Mischens des (der) Masterbatches mit dem übrigen Polymermaterial und den weiteren optionalen Komponenten wird abhängig von dem Polymermaterial und den gewünschten Eigenschaften des herzustellenden Kunststoffs geeignet ausgewählt. Dabei kann die Verarbeitungstemperatur unterhalb oder oberhalb des Schmelzpunktes des Sn-Pulvers oder der Sn-Legierung liegen. Falls die Verarbeitungstemperatur unterhalb des Schmelzpunktes liegt, entspricht die Partikelgröße des Sn-Pulvers bzw. der Sn-Legierung in dem hergestellten Kunststoff der eingesetzten Partikelgröße. Wenn die Verarbeitungstemperatur oberhalb des Schmelzpunktes des Sn-Pulvers bzw. der Sn-Legierung liegt, schmilzt das Sn-Pulver bzw. die Sn-Legierung während der Herstellung des Kunststoffs. Die Partikelgröße in dem hergestellten Kunststoff ist im Wesentlichen abhängig von den Herstellungsbedingungen wie Temperatur oder Umdrehungsgeschwindigkeit der Schnecke.

Es ist auch denkbar, dass das erste und zweite Flammschutzmittel bereits während der Polymerisation der Monomeren des Polymermaterials zugegeben wird. Die verwendeten Mengen an ersten und zweiten Flammschutzmittel sind wie oben angegeben.

Gemäß einer besonders bevorzugten Ausführungsform ist der Kunststoff der vorliegenden Erfindung ein Polystyrolschaum. Das Verfahren zur Herstellung eines solchen Polystyrolschaums sowie die zur Herstellung verwendbare Vorrichtung sind detailliert in EP 1 022 303 beschrieben. In diesem Verfahren wird in einem ersten Verfahrensschritt ein Gemisch aus Polystyrol mit herkömmlichen keimbildenden Mitteln, Weichmachern und Additiven bei einem Druck bzw. einer Temperatur über Atmosphärendruck bzw. Raumtemperatur plastifiziert, um eine Schmelze zu bilden. Um das gewünschte Aufschäumen zu bewirken, wird ein Treibmittel, das nur aus CO₂ und Ethanol besteht, in die Schmelze eingespritzt und die Schmelze wird, wenn sie durch eine Extrudierdüse extrudiert wird, sofort auf Atmosphärendruck dekomprimiert und auf Raumtemperatur abgekühlt. Zur Herstellung eines Polystyrolschaums gemäß der vorliegenden Erfindung wird das halogenhaltige Flammschutzmittel und das Sn-Pulver bzw. die Sn-Legierung in dem obigen ersten Verfahrensschritt in die Schmelze gegeben und mit den anderen Komponenten gemischt.

### Beispiele

### Beispiel 1

Polystyrol mit einer Molmasse (Mw) von 130 000 (SEC), einem Schmelzflussindex (MFI, ISO 1133H) von 23 und einer VICAT-Erweichungstemperatur 50 N (ISO 306 B 50) von 101 °C wird in einen Extruder bei einer Strömungsrate von 1100 kg/h eingebracht. Zu dem Polystyrol werden 0,7 Gew.-% Talkum zur Regulierung der Zellgröße, 0,3 Gew.-% Hexabromcyclododecan (HBCD) und 0,1 Gew.-% metallisches Zinn zugegeben. Sobald die polymere Mischung zu einer Schmelze plastifiziert ist (bei etwa 200 °C), werden 3,0 pph (3,0 Gewichtsteile auf alle 100 Gewichtsteile des polymeren Gemischs) des Treibmittels CO₂ und 2,0 pph Ethanol in die Schmelze eingespritzt. Polystyrolschaum wird am Auslass des Extruders entnommen

### Beispiel 2

Das Experiment aus Beispiel 1 wurde wiederholt, außer dass die Menge HBCD 0,6 Gew.-% betrug.

### Beispiel 3

Das Experiment aus Beispiel 1 wurde wiederholt, außer dass die Menge metallisches Zinn 0,4 Gew.-% betrug.

### Beispiel 4

Das Experiment aus Beispiel 3 wurde wiederholt, außer dass die Menge HBCD 0,6 Gew.-% betrug.

### Vergleichsbeispiel 1

Das Experiment aus Beispiel 4 wurde wiederholt, außer dass kein metallisches Zinn zugegeben wurde.

| Beispiel | Gew.-% Sn (metallisch) | Gew.-% HBCD | Gew.-% Nukleierungsmittel | Gew.-% CO₂ | Gew.-% Ethanol | B1 DIN 4102 |
|---|---|---|---|---|---|---|
| 1 | 0,1 | 0,3 | 0,7 | 3 | 2 | Ja |
| 2 | 0,1 | 0,6 | 0,7 | 3 | 2 | Ja |
| 3 | 0,4 | 0,3 | 0,7 | 3 | 2 | Ja |
| 4 | 0,4 | 0,6 | 0,7 | 3 | 2 | Ja |
| Vergleichsbeispiel | | | | | | |
| 1 | 0,0 | 0,6 | 0,7 | 3 | 2 | Nein |

| Vergleichsbeispiel | | | | | | |
|---|---|---|---|---|---|---|
| 1 | 0,0 | 0,6 | 0,7 | 3 | 2 | Nein |

## Patentansprüche

1. Kunststoff, umfassend 0,01-1,5 Gew.% eines ersten Flammschutzmittels und 0,01-1,5 Gew.% eines zweiten Flammschutzmittels, wobei das erste Flammschutzmittel ein Pulver, bestehend aus Sn oder einer Sn-Legierung mit einem Schmelzpunkt von < 350°, ist und das zweite Flammschutzmittel eine halogenierte organische Verbindung ist, und wobei die Summe an ersten und zweitem Flammschutzmittel 0,1-3,0 Gew.% beträgt.

2. Kunststoff gemäß Anspruch 1, umfassend 0,1 bis 1,0 Gew.% des ersten Flammschutzmittel und 0,1 bis 1,0 Gew.% des zweitem Flammschutzmittel, wobei die Summe an erstem und zweitem Flammschutzmittel 0,2 bis 2 Gew.% beträgt.

3. Kunststoff gemäß Anspruch 2, umfassend 0,1 bis 0,5 Gew.% des ersten Flammschutzmittels und 0,2 bis 0,6 Gew.% des zweiten Flammschutzmittels, wobei die Summe an erstem und zweiten Flammschutzmittel 0,4 bis 1,1 Gew.% beträgt.

4. Kunststoff gemäß einem der Ansprüche 1-3, wobei das pulverförmige Sn oder die pulverförmige Sn-Legierung eine mittlere Teilchengröße im Bereich von 1 bis 1000 µm aufweist.

5. Kunststoff gemäß einem oder mehreren der vorhergehenden Ansprüche 1-4, wobei der Kunststoff extrudierter Polystyrolschaum ist.

6. Verwendung von Pulver, bestehend aus Sn oder einer Sn-Legierung mit einem Schmelzpunkt < 350°C als Flammschutzmittel.
